(19)

Europäisches
Patentamt
European
Patent Office
Office européen
des brevets

(11) **EP 2 930 877 A1**

(12) **EUROPEAN PATENT APPLICATION**

(43) Date of publication:
14.10.2015 Bulletin 2015/42

(51) Int Cl.:
*H04L 9/30* (2006.01)

(21) Application number: 14305536.6

(22) Date of filing: 11.04.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Joye, Marc
35576 Cesson Sévigné (FR)**
• **Libert, Benoît
35576 Cesson-Sévigné (FR)**

(74) Representative: **Browaeys, Jean-Philippe
Technicolor
1, rue Jeanne d'Arc
92443 Issy-les-Moulineaux (FR)**

(54) **Paillier-based blind decryption methods and devices**

(57)    Paillier-based blind decryption. A user device (110) obtains (S10) a first Paillier ciphertext $c$ for a message $m$, generates (S11) a blinded ciphertext $c_0$ by calculating $c_0 = c \bmod N$, sends (S12) the blinded ciphertext $c_0$ to a decryptor (120) and generates (S13) a first value $\varrho_0 = c_0^{-1} \bmod N$ and a blinded plaintext $m^* = \dfrac{(c\varrho_0 \bmod N^2) - 1}{N}$. The decryptor (120) generates (S15) a first key $\lambda_0$ from a private key $\lambda$, generates (S16) a second value $\rho_0 = c_0^{\lambda_0} \bmod N$, generates (S17) a third value $\varrho = \rho_0^N \bmod N^2$ and, finally, generates (S18) a return value $\mu_1 = \dfrac{(\varrho c_0 \bmod N^2) - 1}{N}$ that is returned (S19) to the user device (110), which calculates (S20) the clear plaintext $m = m^* + \mu_1 \bmod N$. The clear plaintext $m$ can then for example be output to a user or stored for later retrieval. Also provided is a generalized Paillier-based blind decryption.

Figure 1

**Description**

TECHNICAL FIELD

The present disclosure relates generally to cryptography, and in particular to blind decryption in public-key cryptosystems.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In 1999 Pascal Paillier proposed a new public-key cryptosystem [Pascal Paillier. Public-key cryptosystems based on composite degree residuosity classes. In Jacques Stern, editor, Advances in Cryptology - EUROCRYPT '99, volume 1592 of Lecture Notes in Computer Science, pages 223-238. Springer, 1999], which was later generalized by Damgård and Jurik [Ivan Damgård and Mads Jurik. A generalisation, a simplification and some applications of Paillier's probabilistic public-key system. In Kwangjo Kim, editor, Public Key Cryptography, volume 1992 of Lecture Notes in Computer Science, pages 119-136. Springer, 2001] and which can be described as follows:

Let an integer $s \geq 1$. Let also two (large) primes $p$ and $q$ and let $N = pq$. The public key is $\{N, s\}$ and the private key is $\lambda = \text{lcm}(p-1, q-1)$. The message space is $\mathcal{M} = \mathbb{Z}/N^s\mathbb{Z}$. The encryption of a message $m \in \mathcal{M}$ is given by

$$c = (1 + N)^m \, r^{N^s} \bmod N^{s+1}$$

for some random element $r$ drawn in $\left(\mathbb{Z}/N^{s+1}\mathbb{Z}\right)^*$ where $\left(\mathbb{Z}/N^{s+1}\mathbb{Z}\right)^*$ denotes the multiplicative group of the ring of integers modulo $N^{s+1}$, $\mathbb{Z}/N^{s+1}\mathbb{Z}$.

The encryption is decrypted inductively using $\lambda$ from

$$c^\lambda \equiv (1+N)^{m\lambda} \, r^{\lambda N^s} \equiv (1+N)^{m\lambda} \equiv (1+N)^{\left(\lambda \sum_{i=0}^{s-1} m_i N^i\right) \bmod N^s} \pmod{N^{s+1}} \qquad (1)$$

where $m = \sum_{i=0}^{s-1} m_i N^i$ and $m_i \in \mathbb{Z}/N\mathbb{Z}$. The following relation is used

$$(1+N)^{\alpha N^{s-1}} \equiv 1 + \alpha N^s \pmod{N^{s+1}} \text{ for any } \alpha \in \mathbb{Z}.$$

Hence, letting $C_i = c^\lambda \bmod N^{i+2}$, for $0 \leq i \leq s-1$, and defining function $\mathrm{L}_k : \mathbb{Z} \to \mathbb{Z}, x \mapsto \mathrm{L}_k(x) = \dfrac{x-1}{N^k}$ equation gives:

$$C_0 \equiv (1+N)^{(\lambda m_0) \bmod N} \equiv 1 + (\lambda m_0 \bmod N)N \pmod{N^2} \Rightarrow m_0 = \frac{\mathrm{L}_1(C_0)}{\lambda} \bmod N$$

$$C_1 \equiv (1+N)^{(\lambda m_0 + \lambda m_1 N) \bmod N^2} \equiv (1+N)^{\lambda m_0}(1+N)^{N(\lambda m_1 \bmod N)} \equiv$$

$$(1+N)^{\lambda m_0}(1+(\lambda m_1 \bmod N)N^2)\,(\bmod\,N^3) \Rightarrow m_1 = \frac{\mathrm{L}_2(D_1)}{\lambda}\bmod N, \quad \text{with} \quad D_1 =$$

$$\frac{C_1}{(1+N)^{\lambda m_0}}\bmod N^3$$

and expressed more generally

$$C_i \equiv (1+N)^{(\lambda m_0 + \cdots + \lambda m_i N^i)\bmod N^{i+1}} \equiv$$

$$(1+N)^{\lambda\left(\sum_{j=0}^{i-1} m_j N^j\right)}(1+N)^{N^i(\lambda m_i \bmod N)} \equiv$$

$$(1+N)^{\lambda\left(\sum_{j=0}^{i-1} m_j N^j\right)}\left(1+(\lambda m_i \bmod N)N^{i+1}\right)\left(\bmod\,N^{i+2}\right) \Rightarrow m_i = \frac{\mathrm{L}_{i+1}(D_i)}{\lambda}\bmod N,$$

$$\text{with } D_i = \frac{C_i}{(1+N)^{\lambda\left(\sum_{j=0}^{i-1} m_j N^j\right)}}\bmod N^{i+2}.$$

In a number of applications, it is required that the owner of the private decryption key $\lambda$, called the decryptor, learns no information about a given plaintext.

In such a setting, a user wishing to get the decryption of a given ciphertext (encrypted under the decryptor's public-key) blinds the ciphertext. In more detail, if c denotes the ciphertext, the user chooses at random an element $\mu \in \mathcal{M}$ and computes the blinded ciphertext

$$c^* = c(1+N)^\mu \bmod N^{s+1}.$$

Upon receiving the blinded ciphertext $c^*$, the decryptor decrypts it and obtains a blinded message $m^* = m + \mu\,(\mathrm{in}\,\mathcal{M})$. The decryptor sends $m^*$ to the user. As the user knows the mask $\mu$ (chosen by the user), the user can recover the plaintext corresponding to ciphertext c as m = m* - $\mu$ (mod $N^{s+1}$).

It will be appreciated that the above protocol wastes bandwith. If $\ell(N)$ is the bit-length of N (typically 2048 or more), the communication between the user and the decryptor incurs an exchange of

$$(s+1)\cdot\ell(N) + s\cdot\ell(N) = (2s+1)\ell(N)$$

bits.

It will be appreciated that it is desired to have a technique that allows to decrease this quantity. It would also be good to have a technique that is faster, in terms of computation, for both the user and the decryptor.

The present disclosure provides such a technique.

SUMMARY

In a first aspect, the disclosure is directed to a cryptographic device comprising: an interface configured to send a blinded ciphertext $c_0$ to a decryption device and to receive a return value $\mu_1$ from the decryption device; and a processor configured to: obtain a ciphertext c, the ciphertext c having been generated using an encryption method with a public key comprising a modulus N being the product of at least two primes p, q; calculate the blinded ciphertext $c_0$ by taking the ciphertext c modulo a value based on the modulus N; calculate a first value $\varrho_0$ through a calculation involving an inverse of the blinded ciphertext $c_0$ modulo a value based on the modulus $N$; generate a blinded plaintext $m^*$ through a calculation involving a multiplication of the ciphertext c and the first value $\varrho_0$; and generate a plaintext m through a calculation involving an addition of the blinded plaintext $m^*$ and the return value $\mu_1$ modulo a value based on the modulus $N$.

In a second aspect, the disclosure is directed to a decryption device comprising: an interface configured to receive a blinded ciphertext $c_0$ from a cryptographic device and to send a return value $\mu_1$ to the cryptographic device; and a processor configured to: calculate a first key $\lambda_0$ through a calculation involving an inversion of a modulus $N$ modulo a value based on a private key $\lambda$; calculate a second value $\rho_0$ through a calculation involving the blinded ciphertext $c_0$ to the power of the first key $\lambda_0$ modulo a value based on the modulus $N$; calculate a third value $\varrho$ through a calculation involving the second value $\rho_0$ to the power of the modulus $N$ modulo a value based on the modulus $N$; and calculate the return value $\mu_1$ through a calculation involving a multiplication of the third value $\varrho$ and the blinded ciphertext $c_0$.

In a third aspect, the disclosure is directed to a cryptographic device comprising: an interface configured to send a blinded ciphertext $c_0$ to a decryption device and to receive at least one return value from the decryption device; and a processor configured to: obtain a ciphertext $c$, the ciphertext $c$ having been generated using an encryption method with a public key comprising a modulus $N$ being the product of at least two primes $p, q$; calculate the blinded ciphertext $c_0$ by taking the ciphertext $c$ modulo a value based on the modulus N; calculate a first value $\varrho_0$ through a calculation involving an inverse of the blinded ciphertext $c_0$ modulo a value based on the modulus $N$; obtain a third value $\varrho$ from the at least one return value; calculate an exponent value $(1 + N)^m$ modulo a value based on the modulus $N$ through a calculation involving a multiplication between the ciphertext c and the third value $\varrho$; and obtain a plaintext $m$ from the exponent value $(1 + N)^m$ modulo a value based on the modulus $N$ using inductive decryption.

In a fourth aspect, the disclosure is directed to a decryption device comprising: an interface configured to receive a blinded ciphertext $c_0$ from a cryptographic device and to send at least one return value to the cryptographic device; and a processor configured to: calculate a first key $\lambda_0$ through a calculation involving an inversion of a modulus $N$ to the power of a value $s$ having been used to generate a ciphertext $c$ from which the blinded ciphertext $c_0$ was calculated, the inversion being taken modulo a value based on a private key $\lambda$; calculate a second value $\rho_0$ through a calculation involving the blinded ciphertext $c_0$ to the power of the first key $\lambda_0$ modulo a value based on the modulus $N$; calculate a third value $\varrho$ through a calculation involving the second value $\rho_0$ to the power of the modulus $N$ to the power of the value $s$ modulo a value based on the modulus $N$ and the value $s$, the third value ; and obtain the at least one return value, the return value being equal to the third value $\varrho$ or a value based on the third value $\varrho$ minus a first component $\varrho_0$ and the modulus $N$, the first component $\varrho_0$ being equal to a value obtained by a calculation involving an inverse of the blinded ciphertext $c_0$ modulo a value based on the modulus $N$.

In a fifth aspect, the disclosure is directed to a cryptographic method for generating a plaintext $m$ for a ciphertext $c$, the method comprising, in a device comprising a processor: obtaining a ciphertext $c$, the ciphertext $c$ having been generated using an encryption method with a public key comprising a modulus $N$ being the product of at least two primes $p, q$; calculating a blinded ciphertext $c_0$ by taking the ciphertext c modulo a value based on the modulus $N$; calculating a first value $\varrho_0$ through a calculation involving an inverse of the blinded ciphertext $c_0$ modulo a value based on the modulus $N$; generating a blinded plaintext $m^*$ through a calculation involving a multiplication of the ciphertext $c$ and the first value $\varrho_0$; and generating the plaintext $m$ through a calculation involving an addition of the blinded plaintext $m^*$ and the return value $\mu_1$ modulo a value based on the modulus $N$.

In a sixth aspect, the disclosure is directed to a cryptographic method for blind decryption of a blinded ciphertext $c_0$, the method comprising, in a device comprising a processor: obtaining a first key $\lambda_0$, the first key $\lambda_0$ having been generated through a calculation involving an inversion of a modulus $N$ modulo a value based on a private key $\lambda$; calculating a second value $\rho_0$ through a calculation involving the blinded ciphertext $c_0$ to the power of the first key $\lambda_0$ modulo a value based on the modulus $N$; calculating a third value $\varrho$ through a calculation involving the second value $\rho_0$ to the power of the modulus $N$ modulo a value based on the modulus $N$; calculating a return value $\mu_1$ through a calculation involving a multiplication of the third value $\varrho$ and the blinded ciphertext $c_0$; and outputting the return value $\mu_1$.

In a seventh aspect, the disclosure is directed to a cryptographic method for generating a plaintext m for a ciphertext $c$, the method comprising, in a device comprising a processor: obtaining the ciphertext $c$, the ciphertext $c$ having been generated using an encryption method with a public key comprising a modulus $N$ being the product of at least two primes $p, q$; calculating the blinded ciphertext $c_0$ by taking the ciphertext c modulo a value based on the modulus $N$; calculating a first value $\varrho_0$ through a calculation involving an inverse of the blinded ciphertext $c_0$ modulo a value based on the modulus N; obtaining a third value $\varrho$ from the at least one return value; calculating an exponent value $(1 + N)^m$ modulo a value based on the modulus $N$ through a calculation involving a multiplication between the ciphertext $c$ and the third value $\varrho$ ; and obtaining the plaintext $m$ from the exponent value $(1 + N)^m$ modulo a value based on the modulus $N$ using inductive decryption.

In an eighth aspect, the disclosure is directed to a cryptographic method for blind decryption of a blinded ciphertext $c_0$, the method comprising, in a device comprising a processor: obtaining a first key $\lambda_0$, the first key $\lambda_0$ having been generated through a calculation involving an inversion of a modulus N to the power of a value s having been used to generate a ciphertext c from which the blinded ciphertext $c_0$ was calculated, the inversion being taken modulo a value based on a private key $\lambda$; calculating a second value $\rho_0$ through a calculation involving the blinded ciphertext $c_0$ to the power of the first key $\lambda_0$ modulo a value based on the modulus $N$; calculating a third value $\varrho$ through a calculation involving the second value $\rho_0$ to the power of the modulus $N$ to the power of the value s modulo a value based on the modulus $N$ and the value s; obtaining the at least one return value, the return value being equal to the third value $\varrho$ or a value based on the third value $\varrho$ minus a first component $\varrho_0$ and the modulus $N$, the first component $\varrho_0$ being equal to a value obtained by a calculation involving an inverse of the blinded ciphertext $c_0$ modulo a value based on the modulus $N$; and outputting the at least one return value.

In a ninth aspect, the disclosure is directed to a computer program product storing instructions that, when executed by a processor, perform the method of the fifth aspect.

In a tenth aspect, the disclosure is directed to a computer program product storing instructions that, when executed by a processor, perform the method of the sixth aspect.

In an eleventh aspect, the disclosure is directed to a computer program product storing instructions that, when executed by a processor, perform the method of the seventh aspect.

In a twelvth aspect, the disclosure is directed to a computer program product storing instructions that, when executed by a processor, perform the method of the eighth aspect.

BRIEF DESCRIPTION OF DRAWINGS

Preferred features of the present disclosure will now be described, by way of non-limiting example, with reference to the accompanying drawings, in which:

Figure 1 illustrates a blind Paillier decryption system and method according to a preferred embodiment; and
Figure 2 illustrates a system and a method for generalized Paillier decryption.

DESCRIPTION OF EMBODIMENTS

First it is observed that for any $r \in \left(\mathbb{Z}/N^{s+1}\mathbb{Z}\right)^*$,

$$r^{N^s} \equiv (r \bmod N)^{N^s} \pmod{N^{s+1}}. \qquad (2)$$

Proof. For any integer $\alpha$, an application of the binomial identity immediately yields

$$(r + \alpha N)^{N^s} \equiv \sum_{j=0}^{N^s} \binom{N^s}{j} r^{N^s - j} (\alpha N)^j \equiv r^{N^s} + \sum_{j=1}^{s} \binom{N^s}{j} r^{N^s - j} (\alpha N)^j \equiv$$

$$r^{N^s} \pmod{N^{s+1}}.$$

□

As a result, the decryption of a ciphertext $c$ can be decrypted in two steps as:

1. $\rho_0 = c_0^{\lambda 0}$ mod N, where $\lambda_0 = -N^{-s}$ mod $\lambda$ and $c_0 = c$ mod $N$;

2. $c\,\rho_0^{Ns} \equiv (1 + N)^m$ (mod $N^{s+1}$) from which $m$ is obtained. This will be described further hereinafter as it depends on the embodiment.

Defining $\varrho = \rho_0{}^{N^S}$ mod $N^{s+1}$ and using equation (2), since $\rho_0 \equiv r^{-1}$ mod $N$, it is possible to write $\varrho = r^{-N^S}$

mod $N^{S+1} = \sum_{i=0}^{s} \varrho_i N^i$ with $0 \le \varrho_i \le N - 1.$ It should also be noted that $\varrho_0 = c_0^{-1}$ mod $N$.

The Paillier cryptosystem corresponds to the case $s = 1$. Hence, letting $\mu_i = \varrho_i / \varrho_0$ mod $N$ gives

$\varrho = \varrho_0(1 + \mu_1 N),$ whence

$$c\varrho \equiv c\varrho_0(1 + \mu_1 N) \equiv (1 + mN) \ (\text{mod } N^2) \Leftrightarrow c\varrho_0 \equiv (1 + (m - \mu_1)N) \ (\text{mod } N^2)$$

and thus

$$m - \mu_1 \text{ mod } N = \frac{(c\varrho_0 \text{ mod } N^2) - 1}{N}.$$

From the sole knowledge of $c$, the user can therefore compute

$$m^* := m - \mu_1 \text{ mod } N = \frac{(c\varrho_0 \text{ mod } N^2) - 1}{N} \text{ with } \varrho_0 = c_0^{-1} \text{ mod } N.$$

Likewise, from the sole knowledge of $c_0$, the decryptor can compute

$$\mu_1 = \frac{\varrho_1}{\varrho_0} \text{ mod } N \text{ with } \varrho = \rho_0{}^N \text{ mod } N^2 = \varrho_1 N + \varrho_0.$$

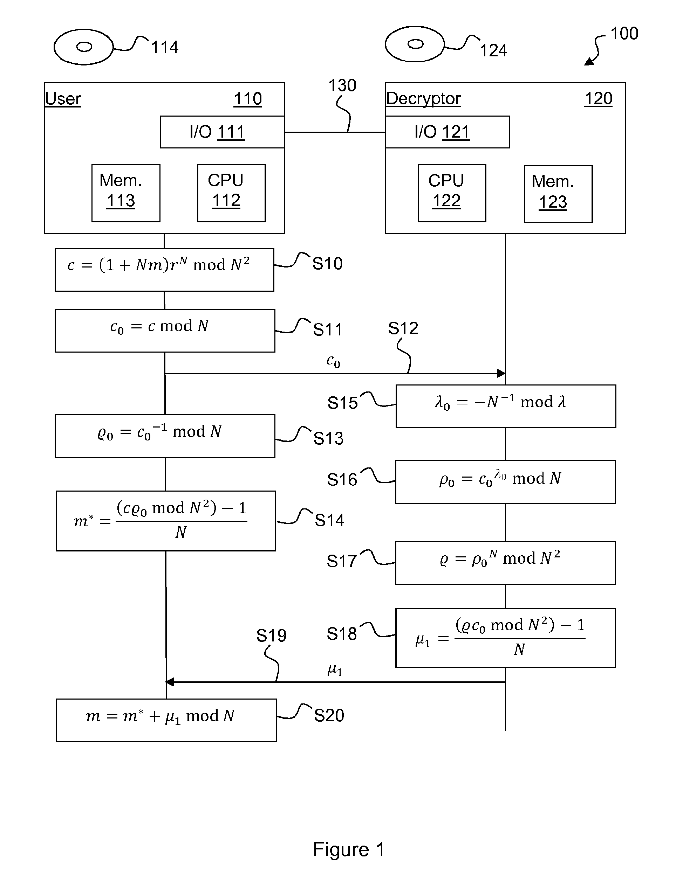

It is worth noting that the value of $c_0$ leaks no information on message $m$. The user thus ends up having $m^* = m - \mu_1$ mod $N$ and the decryptor having $\mu_1$. This is depicted in Figure 1 hereinafter.

Figure 1 illustrates a method for blind Paillier decryption according to the present disclosure. Figure 1 shows a system 100 comprising a user device 110 and a decryption device 120 ("decryptor"). Each device 110, 120 comprises an interface 111, 121 configured for communication with the other device, at least one processor ("CPU") 112, 122 and memory 113, 123. The devices also comprise other necessary hardware and software components such as internal connections, but these are not shown to simplify the illustration. Also shown are a first non-transitory computer program storage medium 114 and a second non-transitory computer program storage medium 116 that store instruction that, when executed by a processor, respectively perform the methods of the user device 110 and the decryptor 120 described hereinafter.

The user device 110 obtains S10 a first ciphertext $c$ for a message m from some external device that has calculated it using Paillier encryption: $c = (1 + mN)r^N$ mod $N^2$, wherein $r$ is a random number and $N$ is a RSA-type modulus. The user device 110 then generates S11 a blinded ciphertext $c_0$ by calculating $c_0 = c$ mod $N$ and sends S12 the blinded ciphertext $c_0$ to the decryptor 120 over a connection 130.

The user device 110 then, advantageously while waiting for a response from the decryptor 120, generates S13 a first value by calculating $\varrho_0 = c_0^{-1}$ mod $N$ and then generates a blinded plaintext by calculating

$$m^* = \frac{(c\varrho_0 \text{ mod } N^2) - 1}{N}.$$

Upon reception of the blinded ciphertext $c_0$, the decryptor 120 generates S15 a first key $\lambda_0$ from a private key $\lambda$ by calculating $\lambda_0 = -N^{-1} \bmod \lambda$, generates S16 a second value by calculating $\rho_0 = c_0{}^{\lambda_0} \bmod N$, generates S17 a third value by calculating $\varrho = \rho_0{}^N \bmod N^2$ and, finally, generates S18 a return value $\mu_1$ by calculating

$\mu_1 = \dfrac{(\varrho c_0 \bmod N^2) - 1}{N}$. The decryptor 120 returns S19 the return value $\mu_1$ to the user device 110.

Upon reception of the return value $\mu_1$, the user device 110 calculates S20 the clear plaintext by calculating $m = m^* + \mu_1 \bmod N$. The clear plaintext m can then for example be output to a user or stored for later retrieval.

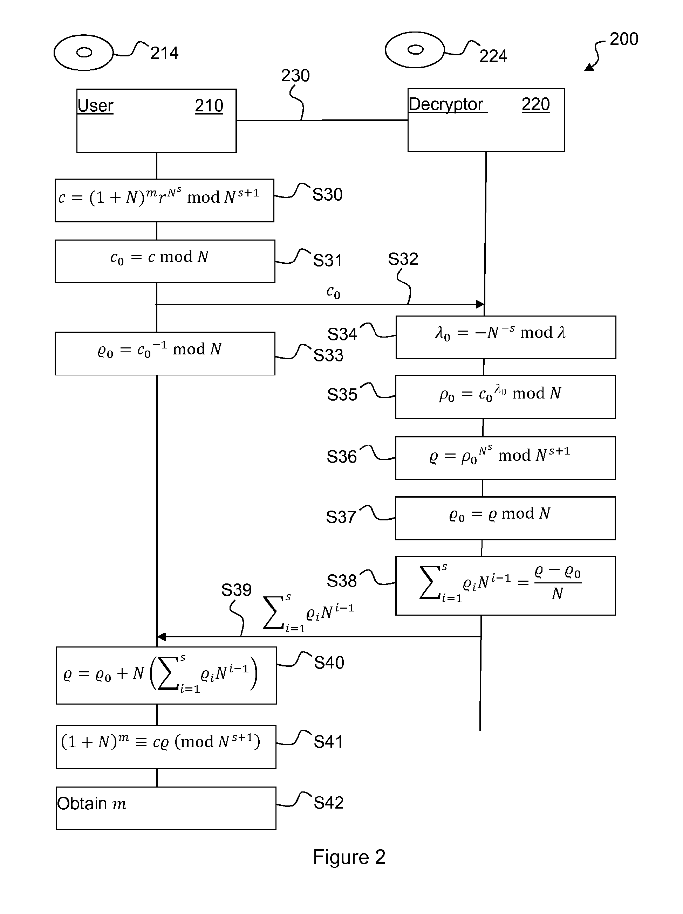

The technique can be generalized to the case $s \geq 1$; the expected relative gain then becomes $(s + 1)/s$. The technique is illustrated in Figure 2. The Figure illustrates a simplified version of the user device 210 and the decryptor 220, but it is to be understood that these devices comprise the necessary hardware and software components, essentially those illustrated for the devices in Figure 1. Figure 2 also illustrates a third non-transitory computer program storage medium 214 and a fourth non-transitory computer program storage medium 216 that store instruction that, when executed by a processor, respectively perform the methods of the user device 210 and the decryptor 220 described hereinafter.

The user device 210 obtains S30 a first ciphertext $c$ for a message m from some external device that has calculated it using Paillier encryption: $c = (1 + mN)r^{N^s} \bmod N^{s+1}$, wherein $r$ is a random number and $N$ is an RSA-type modulus. The user device 210 then generates S31 a blinded ciphertext $c_0$ by calculating $c_0 = c \bmod N$ as in Figure 1 and sends S32 the blinded ciphertext $c_0$ to the decryptor 220 over a connection 230.

The user device 210 then, advantageously while waiting for a response from the decryptor 220, generates S33 a first value by calculating $\varrho_0 = c_0{}^{-1} \bmod N$.

Upon reception of the blinded ciphertext $c_0$, the decryptor 220 generates S34 a first key $\lambda_0$ from a private key $\lambda$ by calculating $\lambda_0 = -N^{-s} \bmod \lambda$, generates S35 a second value by calculating $\rho_0 = c_0{}^{\lambda_0} \bmod N$, generates S36 a third value by calculating $\varrho = \rho_0{}^{N^s} \bmod N^{s+1}$, , generates S37 a fourth value by calculating $\varrho_0 = \varrho \bmod N$ and,

finally, generates S38 a return value by calculating $\dfrac{\varrho - \varrho_0}{N}$ or equivalently $\varrho_1, \ldots, \varrho_s$ and sends S39 this value or these values to the user device 210. It is noted that it is possible to view $\varrho$ as an integer in base $N$, i.e. $\sum_{i=0}^{s} \varrho_i N^{i-1}$.

The user device 210 recovers S40 $\varrho$ from $\varrho_1, \ldots \varrho_s$ and from $\varrho_0 = c_0{}^{-1} \bmod N$. The user device 210 then calculates S41 $c_0$ to obtain $(1 + N)^m \bmod N^{s+1}$.

It then remains to obtain m from $Y := (1 + {}_N)^m \bmod N^{s+1}$. Let $m = \cdot \sum_{i=0}^{s} m_i N^i$ with $m_i \in \mathbb{Z}/N\mathbb{Z}$. Define $Y_i = Y \bmod N^{i+2}$, for $0 \leq i \leq s - 1$. Then:

$$Y_0 \equiv (1+N)^{m_0} \equiv (1 + m_0 N) \pmod{N^2} \ \Rightarrow \ m_0 = \mathrm{L}_1(Y_0)$$

$$Y_1 \equiv (1+N)^{m_0 + m_1 N} \equiv (1+N)^{m_0}(1 + m_1 N^2) \pmod{N^3} \ \Rightarrow \ m_1 = \mathrm{L}_2(Z_1)$$

with $Z_1 = \dfrac{Y_1}{(1+N)^{m_0}} \bmod N^3$

$$Y_i \equiv (1+N)^{\sum_{j=0}^{i} m_j N^j} \equiv (1+N)^{\sum_{j=0}^{i-1} m_j N^j}\left(1 + m_i N^{i+1}\right) \pmod{N^{i+2}} \ \Rightarrow \ m_i =$$

$\mathrm{L}_{i+1}(Z_i)$ with $Z_i = \dfrac{Y_i}{(1+N)^{\sum_{j=0}^{i-1} m_j N^j}} \bmod N^{i+2}$

The clear plaintext m can then for example be output to a user or stored for later retrieval.

In the generalization, with $s = 1$ (i.e., based on the original Paillier cryptosystem), the user device 210 and the decryptor 220 exchange $c_0$ and $\varrho_1$. Upon receiving $\varrho_1$, the user device computes $c(\varrho_0 + N\varrho_1) \bmod N^2$ and gets $(1 + N)^m \equiv 1 + mN \pmod{N^2}$ from which $m$ is obtained; namely $m = \dfrac{(c(\varrho_0 + N\varrho_1) \bmod N^2) - 1}{N}$. While this embodiment is efficient when it comes to N bandwidth as the blind Paillier decryption method illustrated in Figure 1, it is noted that the method illustrated in Figure 1 has the advantage that the calculations of the user device are simpler since in the on-line phase the user device has just to evaluate a mere addition modulo $N$ to obtain $m$.

In a variant of the methods illustrated in Figures 1 and 2, $c_0$ is obtained by reduction modulo a positive integer multiple (greater than 1) of the modulus $N$, for example $2N$, which just requires the transmission of one more bit.

It will be appreciated that the blind-decryption protocol of the present disclosure is bandwidth optimal. This is particularly advantageous when a large number of Paillier ciphertexts are exchanged, which for example is the case in the privacy-preserving recommendation system described by Nikolaenko, Weinsberg, Ioannidis, Joye, Boneh and Taft [Valeria Nikolaenko, Udi Weinsberg, Stratis Ioannidis, Marc Joye, Dan Boneh, and Nina Taft. Privacy-preserving ridge regression on hundreds of millions of records. In *34th IEEE Symposium on Security and Privacy (S&P 2013),* pp. 334-348, IEEE Computer Society, 2013]

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A cryptographic device (110) comprising:

   an interface (111) configured to send a blinded ciphertext $c_0$ to a decryption device (120) and to receive a return value $\mu_1$ from the decryption device (120); and
   a processor (112) configured to:

   - obtain a ciphertext $c$, the ciphertext c having been generated using an encryption method with a public key comprising a modulus $N$ being the product of at least two primes $p, q;$
   - calculate the blinded ciphertext $c_0$ by taking the ciphertext c modulo a value based on the modulus $N$;
   - calculate a first value $\varrho_0$ through a calculation involving an inverse of the blinded ciphertext $c_0$ modulo a value based on the modulus $N$;
   - generate a blinded plaintext $m^*$ through a calculation involving a multiplication of the ciphertext $c$ and the first value $\varrho_0;$ and
   - generate a plaintext m through a calculation involving an addition of the blinded plaintext $m^*$ and the return value $\mu_1$ modulo a value based on the modulus N.

2. A decryption device (120) comprising:

   an interface (121) configured to receive a blinded ciphertext $c_0$ from a cryptographic device (110) and to send a return value $\mu_1$ to the cryptographic device (110); and
   a processor (122) configured to:

   - calculate a first key $\lambda_0$ through a calculation involving an inversion of a modulus N modulo a value based on a private key $\lambda$;
   - calculate a second value $\rho_0$ through a calculation involving the blinded ciphertext $c_0$ to the power of the first key $\lambda_0$ modulo a value based on the modulus $N;$
   - calculate a third value $\varrho$ through a calculation involving the second value $\rho_0$ to the power of the modulus $N$ modulo a value based on the modulus $N$; and
   - calculate the return value $\mu_1$ through a calculation involving a multiplication of the third value $\varrho$ and the blinded ciphertext $c_0$.

3. A cryptographic device (210) comprising:

an interface configured to send a blinded ciphertext $c_0$ to a decryption device (120) and to receive at least one return value from the decryption device (120); and
a processor configured to:

- obtain a ciphertext $c$, the ciphertext $c$ having been generated using an encryption method with a public key comprising a modulus $N$ being the product of at least two primes $p, q;$
- calculate the blinded ciphertext $c_0$ by taking the ciphertext c modulo a value based on the modulus $N$;

- calculate a first value $\varrho_0$ through a calculation involving an inverse of the blinded ciphertext $c_0$ modulo a value based on the modulus $N$;

- obtain a third value $\varrho$ from the at least one return value;
- calculate an exponent value $(1 + N)^m$ modulo a value based on the modulus $N$ through a calculation involving a multiplication between the ciphertext c and the third value $\varrho$ ; and
- obtain a plaintext $m$ from the exponent value $(1 + N)^m$ modulo a value based on the modulus $N$ using inductive decryption.

4. A decryption device (220) comprising:

an interface configured to receive a blinded ciphertext $c_0$ from a cryptographic device (110) and to send at least one return value to the cryptographic device (110); and
a processor configured to:

- calculate a first key $\lambda_0$ through a calculation involving an inversion of a modulus N to the power of a value $s$ having been used to generate a ciphertext $c$ from which the blinded ciphertext $c_0$ was calculated, the inversion being taken modulo a value based on a private key $\lambda$;
- calculate a second value $\rho_0$ through a calculation involving the blinded ciphertext $c_0$ to the power of the first key $\lambda_0$ modulo a value based on the modulus N;

- calculate a third value $\varrho$ through a calculation involving the second value $\rho_0$ to the power of the modulus N to the power of the value s modulo a value based on the modulus N and the value s, the third value ; and

- obtain the at least one return value, the return value being equal to the third value $\varrho$ or a value based on the

third value $\varrho$ minus a first component $\varrho_0$ and the modulus $N$, the first component $\varrho_0$ being equal to a value obtained by a calculation involving an inverse of the blinded ciphertext $c_0$ modulo a value based on the modulus $N$.

5. A cryptographic method for generating a plaintext $m$ for a ciphertext $c$, the method comprising, in a device (110) comprising a processor (112):

- obtaining (S10) a ciphertext $c$, the ciphertext c having been generated using an encryption method with a public key comprising a modulus $N$ being the product of at least two primes $p, q;$
- calculating (S11) a blinded ciphertext $c_0$ by taking the ciphertext c modulo a value based on the modulus $N;$

- calculating (S13) a first value $\varrho_0$ through a calculation involving an inverse of the blinded ciphertext $c_0$ modulo a value based on the modulus $N;$
- generating (S14) a blinded plaintext $m^*$ through a calculation involving a multiplication of the ciphertext c and

the first value $\varrho_0;$ and
- generating (S20) the plaintext $m$ through a calculation involving an addition of the blinded plaintext $m^*$ and the return value $\mu_1$ modulo a value based on the modulus $N$.

6. A cryptographic method for blind decryption of a blinded ciphertext $c_0$, the method comprising, in a device (120) comprising a processor (122):

- obtaining (S15) a first key $\lambda_0$, the first key $\lambda_0$ having been generated through a calculation involving an inversion of a modulus $N$ modulo a value based on a private key $\lambda$;

- calculating (S16) a second value $\rho_0$ through a calculation involving the blinded ciphertext $c_0$ to the power of the first key $\lambda_0$ modulo a value based on the modulus $N$;

- calculating (S17) a third value $\varrho$ through a calculation involving the second value $\rho_0$ to the power of the modulus $N$ modulo a value based on the modulus $N$;

- calculating (S18) a return value $\mu_1$ through a calculation involving a multiplication of the third value $\varrho$ and the blinded ciphertext $c_0$; and
- outputting (S19) the return value $\mu_1$.

7. A cryptographic method for generating a plaintext $m$ for a ciphertext $c$, the method comprising, in a device (210) comprising a processor (212):

- obtaining (S30) the ciphertext $c$, the ciphertext $c$ having been generated using an encryption method with a public key comprising a modulus $N$ being the product of at least two primes $p, q$;
- calculating (S31) the blinded ciphertext $c_0$ by taking the ciphertext $c$ modulo a value based on the modulus $N$;

- calculating (S33) a first value $\varrho_0$ through a calculation involving an inverse of the blinded ciphertext $c_0$ modulo a value based on the modulus $N$;

- obtaining (S40) a third value $\varrho$ from the at least one return value;
- calculating (S41) an exponent value $(1 + N)^m$ modulo a value based on the modulus $N$ through a calculation involving a multiplication between the ciphertext $c$ and the third value $\varrho$; and
- obtaining (S42) the plaintext $m$ from the exponent value $(1 + N)^m$ modulo a value based on the modulus $N$ using inductive decryption.

8. A cryptographic method for blind decryption of a blinded ciphertext $c_0$, the method comprising, in a device (220) comprising a processor (222):

- obtaining (S34) a first key $\lambda_0$, the first key $\lambda_0$ having been generated through a calculation involving an inversion of a modulus $N$ to the power of a value $s$ having been used to generate a ciphertext $c$ from which the blinded ciphertext $c_0$ was calculated, the inversion being taken modulo a value based on a private key $\lambda$;
- calculating (S35) a second value $\rho_0$ through a calculation involving the blinded ciphertext $c_0$ to the power of the first key $\lambda_0$ modulo a value based on the modulus $N$;

- calculating (S36) a third value $\varrho$ through a calculation involving the second value $\rho_0$ to the power of the modulus $N$ to the power of the value s modulo a value based on the modulus $N$ and the value $s$;

- obtaining (S38) the at least one return value, the return value being equal to the third value $\varrho$ or a value based on the third value $\varrho$ minus a first component $\varrho_0$ and the modulus $N$, the first component $\varrho_0$ being equal to a value obtained by a calculation involving an inverse of the blinded ciphertext $c_0$ modulo a value based on the modulus N; and
- outputting (S39) the at least one return value.

9. A computer program product (114) storing instructions that, when executed by a processor, perform the method of claim 5.

10. A computer program product (124) storing instructions that, when executed by a processor, perform the method of claim 6.

11. A computer program product (214) storing instructions that, when executed by a processor, perform the method of claim 7.

12. A computer program product (224) storing instructions that, when executed by a processor, perform the method of claim 8.

Figure 1

214

224

200

User      210

230

Decryptor     220

$$c = (1 + N)^m r^{N^s} \bmod N^{s+1}$$ S30

$$c_0 = c \bmod N$$ S31   S32

$c_0$

$$\varrho_0 = c_0^{-1} \bmod N$$ S34   $$\lambda_0 = -N^{-s} \bmod \lambda$$

S33

S35   $$\rho_0 = c_0^{\lambda_0} \bmod N$$

S36   $$\varrho = \rho_0^{N^s} \bmod N^{s+1}$$

S37   $$\varrho_0 = \varrho \bmod N$$

S39   S38   $$\sum_{i=1}^{s} \varrho_i N^{i-1} = \frac{\varrho - \varrho_0}{N}$$

$$\sum_{i=1}^{s} \varrho_i N^{i-1}$$

$$\varrho = \varrho_0 + N\left(\sum_{i=1}^{s} \varrho_i N^{i-1}\right)$$ S40

$$(1 + N)^m \equiv c\varrho \pmod{N^{s+1}}$$ S41

Obtain $m$   S42

Figure 2

**EP 2 930 877 A1**

Europäisches
Patentamt

European
Patent Office

Office européen
des brevets

## EUROPEAN SEARCH REPORT

Application Number

EP 14 30 5536

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | PAILLER P ED - STERN J (ED): "PUBLIC-KEY CRYPTOSYSTEMS BASED ON COMPOSITE DEGREE RESIDUOSITY CLASSES", 1 January 1999 (1999-01-01), ADVANCES IN CRYPTOLOGY - EUROCRYPT '99. INTERNATIONAL CONF. ON THE THEORY AND APPLICATION OF CRYPTOGRAPHIC TECHNIQUES. PRAGUE, CZ, MAY 2 - 6, 1999 PROCEEDINGS; [LECTURE NOTES IN COMPUTER SCIENCE], BERLIN : SPRINGER, DE, PAGE(S) 223 - 238, XP000830710, ISBN: 978-3-540-65889-4 * section 5 * | 1-12 | INV. H04L9/30 |
| X,D | Ivan Damgård ET AL: "A Generalisation, a Simpli.cation and Some Applications of Paillier's Probabilistic Public-Key System" In: "Field Programmable Logic and Application", 5 June 2001 (2001-06-05), Springer Berlin Heidelberg, Berlin, Heidelberg, XP055148869, ISSN: 0302-9743 ISBN: 978-3-54-045234-8 vol. 1992, pages 119-136, DOI: 10.1007/3-540-44586-2_9, * section 3 * | 1-12 | |
| X | IVAN DAMGÅRD ET AL: "A generalization of Paillierâ s public-key system with applications to electronic voting", INTERNATIONAL JOURNAL OF INFORMATION SECURITY, SPRINGER, BERLIN, DE, vol. 9, no. 6, 30 September 2010 (2010-09-30), pages 371-385, XP019863855, ISSN: 1615-5270, DOI: 10.1007/S10207-010-0119-9 * sections 3 and 4 * | 1-12 | TECHNICAL FIELDS SEARCHED (IPC)<br><br>H04L |

The present search report has been drawn up for all claims

| Place of search | Date of completion of the search | Examiner |
|---|---|---|
| Munich | 27 October 2014 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 2 930 877 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Advances in Cryptology - EUROCRYPT '99. Lecture Notes in Computer Science. Springer, 1999, vol. 1592, 223-238

- A generalisation, a simplification and some applications of Paillier's probabilistic public-key system. **IVAN DAMGÅRD ; MADS JURIK.** Public Key Cryptography, volume 1992 of Lecture Notes in Computer Science. Springer, vol. 1992, 119-136